# EUROPÄISCHE PATENTSCHRIFT

(11) **EP 1 859 021 B1**
(45) Veröffentlichungstag und Bekanntmachung des Hinweises auf die Patenterteilung: **10.02.2010**
(21) Anmeldenummer: 06723630.7
(22) Anmeldetag: 22.03.2006
(51) Int. Cl.: C12C 13/00, F24J 2/00, F24J 2/12, F25B 27/00, F22B 27/00

(54) **BRAUEREIANLAGE UND BRAUVERFAHREN**
BREWERY PLANT AND METHOD
INSTALLATION ET PROCEDE DE BRASSAGE

(30) Priorität: 23.03.2005 EP 05006424
(43) Veröffentlichungstag der Anmeldung: 28.11.2007
(73) Patentinhaber: Krones AG, 93073 Neutraubling (DE)
(72) Erfinder: STIPPLER, Kurt, 85417 Marzling (DE); WASMUHT, Klaus, Karl, 91792 Ellingen (DE)
(74) Vertreter: Grünecker, Kinkeldey, Stockmair & Schwanhäusser Anwaltssozietät
(86) Internationale Anmeldenummer: PCT/EP2006/002638
(87) Internationale Veröffentlichungsnummer: WO 2006/100062

(56) Entgegenhaltungen:
- DE-U1- 9 404 428
- US-A- 4 326 502
- LATMIRAL G: "Energy problems and the brewing industry." BIRRA E MALTO BIRRA PERONI, NAPLES, ITALY, Bd. 24, Nr. 11, 1979, Seite 3, XP001207059
- MURRAY O L: "Solar pasteurization of beer: a pilot application." TECHNICAL QUARTERLY, MASTER BREWERS' ASSOCIATION OF THE AMERICAS TECHNAPAC CO., ST. LOUIS, MISSOURI, USA, Bd. 16, Nr. 1, 1979, Seite 13, XP001207058
- BRANDON H ET AL: "Assessing new energy systems in brewing. I." BREWING & DISTILLING INTERNATIONAL, Bd. 10, Nr. 5, 1980, Seite 42, XP009052230
- PERL J ET AL: "Nutzung solarer Prozesswärme in Brauereien." FORUM DER BRAUEREI, Bd. 36, Nr. 10, 1983, Seite 305, XP009052231
- BRANDON H ET AL: "Assessment of energy conservation/new energy systems in the brewing industry." TECHNICAL QUARTERLY, MASTER BREWERS' ASSOCIATION OF THE AMERICAS TECHNAPAC INC., ST. LOUIS, MISSOURI, USA, Bd. 17, Nr. 1, 1980, Seite 24, XP009052283
- DIENG A O ET AL: "Literature review on solar adsorption technologies for ice-making and air-conditioning purposes and recent developments in solar technology" RENEWABLE AND SUSTAINABLE ENERGY REVIEWS, ELSEVIERS SCIENCE, NEW YORK, NY, US, Bd. 5, Nr. 4, Dezember 2001 (2001-12), Seiten 313-342, XP004251501 ISSN: 1364-0321

## Beschreibung

Die Erfindung betrifft eine Brauereianlage mit wenigstens einem Maischgefäß, einem Läuterbottich, einer Würzepfanne und einem Wasserhaus sowie ein Brauverfahren gemäß den Oberbegriffen der Ansprüche 1 und 6.

Aus der Druckschrift LATMIRAL G: "Energy problems and the brewing Industry", BIRRA E MALTO BIRRA PERONI, NAPLES, ITALY, Bd. 24, Nr. 11, 1979, Seite 3 ist bereits eine Brauereianlage sowie ein Brauverfahren gemäß den Oberbegriffen der Ansprüche 1 und 6 beschrieben. Hier werden einzelne Bereiche mit Solarenergie versorgt.

Aus der Druckschrift MURRAY O L: "Solar pasteurization of beer: a pilot application", TECHNICAL QUARTERLY, MASTER BREWERS' ASSOCIATION OF THE AMERICAS TECHNAPAC CO., ST. LOUIS, MISSOURI, USA, Bd. 16, Nr. 1, 1979 sind Fluidtemperaturen < 120° beschrieben. In dieser Druckschrift wird Energie nicht in einem Hochdrucktank gespeichert. Überschüssige Energie, die nicht gleich dem Verbraucher zugeführt wird, wird in einem Speicher in Form eines Phasenwechselmaterials gespeichert. Hier wird jeweils eine Prozessschleife von dem Speicher gespeist.

Bierbrauen ist ein Energie aufwendiges Verfahren, wobei sowohl elektrische Energie als auch Wärmeenergie benötigt wird. Insgesamt machen die Energiekosten einen beachtenswerten Anteil der Gesamtherstellungskosten von Bier aus. Tendenziell muss davon ausgegangen werden, dass der Anteil der Energiekosten mit der Verknappung fossiler Brennstoffe und den damit verbundenen höheren Energiepreisen noch zunehmen werden.

Um den Einfluss der Energiekosten auf die Herstellungskosten zu verringern, wurde in herkömmlichen Brauereianlagen versucht die Energierückgewinnung sowie den Gesamtwirkungsgrad der Anlage zu verbessern. So wird beispielsweise das Speisewasser durch Abkühlung von Rauchgasen in einem Economizer vorgewärmt oder erhitzter Dampf genutzt, der im Vergleich zu normalem Dampf transportabler ist und somit weniger Verluste entstehen. Um zusätzlich die Energieerzeugung ökonomischer zu machen, werden vermehrt Blockheizkraftwerke eingesetzt, die sowohl zur Erzeugung elektrischen Stroms als auch für die Heißwasser- bzw. Dampferzeugung benutzt werden. Da diese jedoch ebenso auf fossilen Brennstoffen basieren, sind auch sie nicht unabhängig von Preissteigerungen aufgrund der Verknappung fossiler Brennstoffe.

Es ist daher Aufgabe der vorliegenden Erfindung eine Brauereianlage sowie ein Brauverfahren bereitzustellen, um die Brauereien vom Bedarf an fossilen Brennstoffen unabhängiger zu machen.

Erfindungsgemäß wird diese Aufgabe durch die Merkmale der Ansprüche 1 und 6 gelöst.

Mit Hilfe von Sonnenkollektoren, die die Energie der Sonnenstrahlen in Wärmeenergie umwandeln, wird es ermöglicht, zumindest einen Teil des Wärmeenergiebedarfs der Brauereianlage mit Hilfe von Energie zu decken, die nicht aus fossilen Brennstoffen stammt. Entscheidend für die Anwendung in einer Brauerei ist dabei, dass die Sonnenkollektoren so ausgelegt werden, dass das für den Brauprozess benötigte wärmste Fluid durch die Solarenergie auf eine Temperatur von mindestens 120° C, insbesondere auf eine Temperatur von 160° C bis 180° C aufgeheizt werden kann. Die Fluiderhitzung wird also nicht, wie sonst beim Einsatz von Sonnenkollektoren in der Bauwirtschaft üblich, auf die Erzeugung von Warmwasser von ca. 50°C bis 60°C beschränkt.

Je nach Bedarf der Brauereianlage kann weiterhin die Erhitzung des Fluids durch die Sonnenkollektoren direkt, d.h. das Fluid fließt durch die Sonnenkollektoren und wird dort erwärmt, oder indirekt, d.h. ein zweites Fluid wird im Sonnenkollektor erhitzt und über einen Wärmeaustauscher wird Wärmeenergie an das im Brauprozess benutzte Fluid weitergegeben, erfolgen.

Vorzugsweise kann die in den Sonnenkollektoren erzeugte Wärmeenergie in einem Wärmespeicher zwischengespeichert werden und über eine Steuereinheit gesteuert den Wärmeenergieverbrauchem, insbesondere dem Maischgefäß, dem Läuterbottich, der Würzepfanne, dem Wasserhaus, einer CIP-Anlage und/oder einem Flaschenkeller, insbesondere für die Flaschenreinigung, zugeführt werden. Somit lässt sich unabhängig vom Ablauf des Brauprozesses die Wärmeenergie durch die Sonnenkollektoren gewinnen und je nach Bedarf den einzelnen Wärmeenergieverbraucher in der Brauereianlage gesteuert zuführen. Die Steuerung oder Regelung betrifft dabei die Temperatur des Fluids und/oder den Volumenstrom, wobei sich die zugeführte Wärmeenergiemenge aus diesen Parametern ergibt.

Gemäß einer bevorzugten Ausführungsform kann die Brauerei zur Kälteversorgung eine sorptive Kälteanlage aufweisen, deren Wärmeenergiebedarf zumindest teilweise über die von den Sonnenkollektoren erzeugte Wärmeenergie gedeckt wird. Herkömmlicherweise werden in Brauereien Kompressionskühlanlagen benutzt, die jedoch die gleichen Nachteile wie die herkömmlichen Wärmeerzeuger aufweisen. Die Nutzung einer sorptiven Kälteanlage bringt dagegen den Vorteil, dass die von den Sonnenkollektoren erzeugte Wärmeenergie eben auch für die Erzeugung der benötigten Kälte herangezogen werden kann.

Vorzugsweise kann als Fluid Wasser unter erhöhtem Druck (Hochdruckwasser) benutzt werden. Durch die Erhöhung der Siedetemperatur kann man mit dem Hochdruckwasser in der flüssigen Phase die benötigten hohen Temperaturen von mindestens 120°C, insbesondere von Temperaturen in einem Bereich von 160 bis 180°C, erzielen.

In einer bevorzugten Ausführungsform können die Sonnenkollektoren parabole Rinnenkollektoren aufweisen. Durch die Fokussierung der Sonnenstrahlen mit Hilfe eines parabolförmigen Spiegels auf die Leitungen, in denen ein aufzuheizendes Fluid fließt, auf relativ hohe Temperaturen, insbesondere Temperaturen von bis zu 400°C aufgeheizt werden. Somit lässt sich Aufheizung auf 120° C, insbesondere auf 160 bis 180° C für das im Brauverfahren benutzte Fluid, auch in Breitengraden realisieren, die im Vergleich zu südlichen Ländern weniger Sonneneinstrahlung aufweisen.

Bevorzugt kann beim indirekten Aufheizen des Fluids in den Sonnenkollektoren zur Aufnahme der Wärmeenergie ein Thermoöl, eine Salzschmelze oder Dampf dienen. Mit diesen Werkstoffen lassen sich hohe Wirkungsgrade (besser als 14%) erzielen.

Die Erfindung betrifft auch ein Brauverfahren, das dadurch gekennzeichnet ist, dass der Wärmeenergiebedarf zumindest eines Teils der Brauprozessschritte, insbesondere beim Maischen, Läutern und/oder Würzekochen, zumindest teilweise mit einem von Sonnenkollektoren auf eine Temperatur von mindestens 120° C, insbesondere auf eine Temperatur in einem Bereich von 160° C bis 180° C, direkt oder indirekt erhitzten Fluids gedeckt werden. Durch den Einsatz von Wärmeenergie aus den Sonnenstrahlen kann somit die Abhängigkeit von herkömmlichen Wärmeenergieerzeugem reduziert werden. Um das Verfahren wirtschaftlicher als bei der herkömmlichen Energiegewinnung zu machen ist es besonders wichtig, dass das Fluid bis auf die im Prozess benutzten höchsten Temperaturen aufgeheizt werden kann. Dabei kann das Fluid sowohl direkt als auch indirekt aufgeheizt werden.

Gemäß einer bevorzugten Ausführungsform kann der Wärmeenergiebedarf beim Flaschenreinigen zumindest teilweise mit einem von Sonnenkollektoren auf eine Temperatur von mindestens 120° C, insbesondere auf eine Temperatur in einem Bereich von 160° C bis 180° C, direkt oder indirekt erhitzten Fluids gedeckt werden. Der vorteilhafte Einsatz der Solarenergie ist somit nicht nur auf den eigentlichen Brauprozess beschränkt, sondern kann bei der gesamten Bierherstellung benutzt werden. Im Flaschenkeller ist dabei insbesondere der Energiebedarf bei der Flaschenreinigung hoch, so dass der Einsatz von Sonnenenergie vorteilhaft ist.

Vorzugsweise kann der Wärmeenergiebedarf einer sorptiven Kälteanlage bei der Herstellung von Eiswasser für das Brauverfahren zumindest teilweise mit einem von Sonnenkollektoren auf eine Temperatur von mindestens 120° C, insbesondere auf eine Temperatur in einem Bereich von 160° C bis 180° C, direkt oder indirekt erhitzten Fluids gedeckt werden. Der vorteilhafte Einsatz der Solarenergie ist also nicht nur auf den eigentlichen Wärmeenergiebedarf im Brauprozess beschränkt, sondern kann auch bei der Herstellung des im Prozess benötigten Eiswassers genutzt werden, um die Abhängigkeit von herkömmlichen Energieträgem zu verringem.

Gemäß einer bevorzugten Ausführungsform umfasst die Brauereianlage zusätzlich eine bei Bedarf zuschaltbare Schnelldampferzeugereinrichtung, die dem von den Sonnenkollektoren zu erhitzenden Fluid Wärmeenergie zuführt.

Diese Ausführungsform bringt den Vorteil mit sich, dass dann, wenn die Leistung der Sonnenkollektoren nicht ausreichend ist, beispielsweise aufgrund verringerter Sonneneinstrahlung infolge von schlechtem Wetter oder tageszeitbedingt eine Schnelldampferzeugereinrichtung zugeschaltet werden kann. Somit ist sichergestellt, dass den einzelnen Wärmeverbrauchern auch bei verringerter Sonneneinstrahlung ausreichend Wärmeenergie zugeführt werden kann. Eine Schnelldampferzeugereinrichtung zeichnet sich dadurch aus, dass sie in kürzester Zeit Dampf, insbesondere Wasserdampf erzeugen kann, um ein Leistungsdefizit der Sonnenkollektoren zu kompensieren. Die Schnelldampferzeugereinrichtung ist insbesondere vorteilhaft, da diese beispielsweise durch regenerative Energiequellen über ein Heizkraftwerk betrieben werden kann, was die Anlage insgesamt unabhängig von nicht regenerierbaren Energiequellen, insbesondere fossilen Brennstoffen macht.

Weiter kann die Anlage eine Einrichtung umfassen, die erfasst, ob die Leistung der Sonnenkollektoren ausreicht, um den Energiebedarf von Wärmeverbrauchern zu decken, denen über das Fluid Wärmeenergie zugeführt wird, insbesondere um das Fluid auf eine Temperatur von mindestens 120°, insbesondere 160° bis 180° aufzuheizen und die veranlasst, die Schnelldampferzeugereinrichtung zuzuschalten, wenn die Leistung der Sonnenkollektoren nicht ausreicht.

Somit kann das erhitzte Fluid verlässlich auf eine bestimmte Temperatur geregelt werden, auch wenn es zu Schwankungen in der Sonneneinstrahlung kommt.

Dabei wird vorzugsweise die Leistung der Schnelldampferzeugereinrichtung in Abhängigkeit der Leistung der Sonnenkollektoren, d. h. selbstverständlich auch in Abhängigkeit der Sonneneinstrahlung reguliert.

Gemäß der Erfindung wird das von den Sonnenkollektoren erhitzte Fluid in einem Hochdrucktank, gespeichert. Der Einsatz des Hochdrucktanks ermöglicht, dass durch Siedepunktserhöhung Wasser einer Temperatur >100° gespeichert werden kann. Der Hochdrucktank ist ein Schichtspeicher, in dessen oberem Bereich heißes Wasser für Heißwasserverbraucher abgezogen werden kann, und dem in einem Kreislauf im unteren Bereich das kältere Wasser zur erneuten Erwärmung wieder zugeführt werden kann.

Vorteilhafterweise heizt die Schnelldampferzeugereinrichtung das Fluid in dem Wärmespeichertank, insbesondere Hochdrucktank, auf, wenn er zugeschaltet wird. Zur Bestimmung, ob die Schnelldampferzeugereinrichtung zugeschaltet wird oder nicht, kann dann beispielsweise auch die Temperatur im Energiespeichertank, die letztendlich auch von der Leistung der Sonnenkollektoren abhängt, herangezogen werden.

Gemäß einer bevorzugten Ausführungsform wird ein Teil des von den Sonnenkollektoren erwärmten Fluids als Dampf Wärmeverbrauchern zugeführt, die als Heizmedium Dampf benötigen, wobei ein anderer Teil des erwärmten Fluids, das in dem Hochdrucktank gespeichert ist, Wärmeverbrauchern zugeführt wird, die Heißwasser benötigen, während ein weiterer Teil des von den Sonnenkollektoren erwärmten Fluids einer Absorptionskälteanlage zugeführt wird, die Kühlmedium (wie z. B. NH₃ und Wasser, Glykol, Eiswasser etc.) an Kälteverbraucher liefert.

Dieses Konzept ermöglicht, dass über das auf eine Temperatur von über 120° erhitzte Fluid für Dampfwärmeverbraucher, Heißwasserwärmeverbraucher und gleichzeitig Kälteverbraucher (durch Verwendung einer Absorptionskälteanlage) verwendet werden kann. Dieses Gesamtkonzept, insbesondere in Kombination mit der Schnelldampferzeugereinrichtung ermöglicht eine ideale Versorgung der einzelnen Verbraucher mit Energie auf einfache Art und Weise.

Bei Bedarf kann dann für alle Bereiche, d. h. für den Dampfbereich, Heißwasserbereich und Kältebereich durch eine Dampferzeugereinrichtung bei Bedarf die zugeführte Wärmemenge erhöht werden.

Vorzugsweise erzeugt dann der zugeschaltete Schnelldampferzeuger Dampf für die Wärmeverbraucher, die Dampf benötigen oder aber erzeugt durch die Schnelldampferzeugereinrichtung Dampf, der an die Absorptionskälteanlage weitergeleitet wird.

Vorzugsweise wird der Schnelldampferzeugereinrichtung ein Dampfstrahlverdichter nachgeschaltet, damit der Dampf beispielsweise für die Wärmeverbraucher im Sudhaus, etc. verwendet werden kann.

Das von den Sonnenkollektoren erhitzte Fluid, das den Wärmeverbrauchern, die als Heizmedium Dampf benötigen, zugeführt wird, wird dabei einem Entspannungstank und einem Dampfstrahlverdichter zugeführt.

Gemäß der Erfindung kann entweder ein Schnelldampferzeuger für die Wärmeverbraucher mit Heizmedium Dampf, Heißwasser und Kälte zum Zuschalten vorgesehen sein. Die Schnelldampferzeugereinrichtung kann jedoch auch mehrere entsprechende Schnelldampferzeuger umfassen.

Ein Ausführungsbeispiel der Erfindung ist in der Zeichnung dargestellt und wird nachstehend im Detail erläutert. Es zeigt:
- Fig. 1: schematisch eine Brauereianlage gemäß einer bevorzugten Ausführungsform der vorliegenden Erfindung;
- Fig. 2: schematisch eine Kombination aus Sonnenkollektoren, einem Hochdrucktank und einem Dampfkessel;
- Fig. 3: schematisch eine Brauereianlage mit solarthermisch entkoppelter Wärmeversorgung gemäß der vorliegenden Erfindung;
- Fig. 4: schematisch eine Brauereianlage mit einer solarthermisch integrierten Wärmeversorgung;
- Fig. 5: schematisch ein Gesamtkonzept für eine Brauereianlage gemäß der vorliegenden Erfindung;
- Fig. 6: schematisch ein Gesamtkonzept für eine Brauereianlage gemäß der vorliegenden Erfindung.

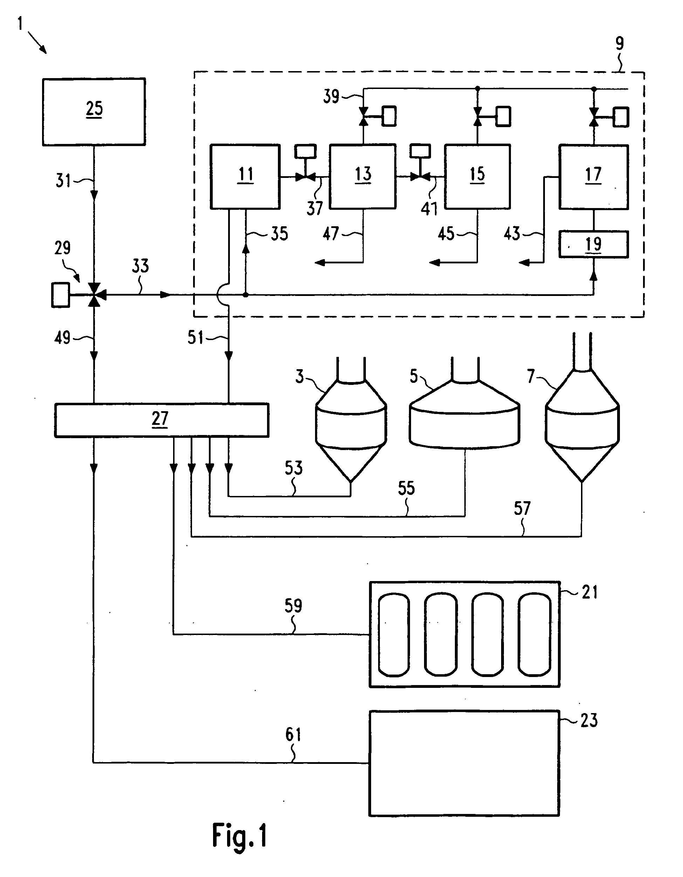

Figur 1 zeigt eine Brauereianlage 1 mit einem Maischgefäß 3, einem Läuterbottich 5 einer Würzepfanne 7 und einem Wasserhaus 9. Das Wasserhaus 9 umfasst mehrere Wärmespeicher: einen Hochdruckheißwasserspeicher 11, geeignet für Fluidtemperaturen von mindestens 120° C, insbesondere von 160° bis 180° C, einen Warmwasserspeicher 13, einen Kaltwasserspeicher 15 und einen Eiswasserspeicher 17. Zur Erzeugung des Eiswassers dient eine sorptive Kälteanlage 19. Zusätzlich weist die Brauereianlage 1 auch eine CIP (Cleaning in Process)-Anlage 21 auf. Diese Anlage dient der Reinigung und Desinfektion der Brauereianlage 1. Darüber hinaus ist schematisch auch ein Flaschenkeller 23 dargestellt. Dort stehen die Füllanlagen sowie die Flaschenreinigungsanlagen der Brauerei. Schließlich sind in Figur 1 Sonnenkollektoren 25 dargestellt. Diese dienen dazu, zumindest einen Teil des Wärmeenergiebedarfs der Brauerei 1 zu decken. Die Sonnenkollektoren 25 sind dabei so ausgelegt, dass ein Fluid mit Hilfe der Sonnenkollektoren 25 direkt oder indirekt auf mindestens 120° C, insbesondere bis auf 160° bis 180° C aufgeheizt wird.

Bei der direkten Methode wird das Fluid direkt im Sonnenkollektor 25 von den Sonnenstrahlen aufgeheizt, während bei der indirekten Methode ein zweites Fluid aufgeheizt wird, dessen Energie über einen Wärmeaustauscher (nicht gezeigt) auf das erste Fluid, das im Brauprozess weiter benutzt wird, übertragen wird.

Als für die Verwendung in einer Brauerei vorteilhaft haben sich insbesondere Parabolrinnenkollektoren erwiesen. Bei diesen Sonnenkollektoren 25 wird das Sonnenlicht durch parabolförmige Spiegel auf eine Röhre fokussiert, in der das aufzuheizende Fluid zirkuliert. In der indirekten Ausführungsform kann dabei beispielsweise ein Thermoöl, eine Salzschmelze oder Dampf benutzt werden, wobei Temperaturen von bis zu 400° erzielt werden. Bei der direkten Methode eignet sich unter Hochdruck stehendes Wasser, um die gewünschten Temperaturen von mindestens 120° C, insbesondere von 160°C bis 180° C, in der Flüssigphase zu erzielen.

Die Brauereianlage 1 weist weiterhin eine Steuer- und Regelungseinheit 27 auf, die dazu dient, das erhitzte Fluid an die verschiedenen Wärmeenergieverbraucher gesteuert bzw. geregelt weiterzuleiten. Dabei ist die Anlage 1 so ausgelegt, dass die Steuereinheit 27 den erhitzten Fluidstrom entweder direkt von den Sonnenkollektoren 25 oder aber über den Hochdruckheißwasserspeicher 11 bezieht. Zum Umschalten zwischen den beiden Strömen dient beispielsweise ein Umschaltventil 29.

In der in Figur 1 dargestellten Brauereianlage 1 sind nur die Elemente dargestellt, die einen hohen Wärmeenergiebedarf aufweisen. Auf die Darstellung weiterer Elemente, wie Gär- und Lagerkeller, Filterkeller etc. wurde verzichtet.

Die erfindungsgemäße Funktionsweise der Wärmeenergieversorgung der Brauereianlage 1 wird nun im Detail beschrieben. Das von den Sonnenkollektoren 25 direkt oder indirekt aufgeheizte Fluid mit einer Temperatur von mindestens 120° C, insbesondere von 160°C bis 180° C, fließt über die Leitungen 31, 33 und 35 in den Hochdruckheißwasserspeicher 11. Dort kann die von den Sonnenkollektoren 25 erzeugte Wärmeenergie zwischengespeichert werden und je nach Bedarf abgerufen werden. Wird der Wärmeenergiebedarf nicht vollständig von den Sonnenkollektoren 25 gedeckt, so kann die fehlende Wärmemenge durch herkömmliche Verfahren erzeugt und dem Speicher zugeführt werden.

Über die Leitung 37 ist der Heißwasserspeicher 11 mit dem Warmwasserspeicher 13 verbunden. Somit kann durch Vermischen von kaltem Wasser aus dem Kaltwasservorlauf 39 mit dem Hochdruckheißwasser 37 das benötigte Warmwasser von üblicherweise ca. 80° C erzeugt werden. Ebenso kann über die Leitung 41 und den Kaltwasservorlauf 39 das Wasser im Kaltwasserspeicher 15 auf die gewünschte Temperatur von üblicherweise 15°C gebracht werden. Im Wasserhaus 9 wird darüber hinaus Kühlmedium, typischerweise von einer Temperatur von 2° C, im Eiswasserspeicher 17 zubereitet. Dazu wird erfindungsgemäß eine sorptive Kälteanlage 19 benutzt, die die von ihr benötigte Wärmeenergie entweder aus dem Hochdruckheißwasserspeicher 11 oder direkt von den Sonnenkollektoren 25 erhält. Von den verschiedenen Wasserspeichem gehen die Leitungen 43, 45 und 47 über die Steuereinheit 27 zu den jeweiligen Verbrauchern.

Je nach Einstellung des Umschaltventils 29 wird der Steuer- und Regelungseinheit 27 das erhitzte Fluid direkt über die Leitung 49 oder aber vom Hochdruckheißwasserspeicher 11 über die Leitung 51 zugeführt. Die Steuer- und Regeleinheit 27 verteilt dann die im Hochdruckheißwasser gespeicherte Wärmeenergie je nach Bedarf an die Wärmeenergieverbraucher der Brauereianlage 1. Evtl. kann dabei durch Mischen mit Wasser aus den anderen Speichem 13, 15 und 17 für jedes Element der Brauereianlage 1 individuell die benötigte Wärmeenergiemenge über den Volumenstrom und/oder die Fluidtemperatur zugeführt werden.

So wird das Maischgefäß 3 über die Zuleitung 53, der Läuterbottich 5 über die Zuleitung 55 und die Würzepfanne 7 über die Zuleitung 57 mit der benötigten Wärmeenergie versorgt. Ebenso wird die CIP-Anlage 21 über die Leitung 59 mit Wärmeenergie versorgt. Der Flaschenkeller 23, insbesondere mit der Flaschenreinigungsanlage (nicht gezeigt) wird über die Leitung 61 versorgt. Der besseren Übersicht halber wurden die benötigten Fluidrückläufe in der Figur 1 nicht dargestellt.

Selbstverständlich können auch noch weitere Elemente, wie beispielsweise die Gebäudeheizung, bei Bedarf mit Wärmeenergie aus den Sonnenkollektoren 25 versorgt werden. Weiterhin ist denkbar, dass anstatt oder zusätzlich zum Hochdruckheißwasser auch ein Dampferzeuger benutzt wird, um zumindest Teile der Brauereianlage 1 über Dampf, insbesondere Dampf mit höheren Drücken, mit Wärmeenergie zu versorgen. Weiterhin ist denkbar, dass zusätzlich zur Aufheizung eines Fluids zur Wärmeenergieversorgung auch Photovoltaikelemente zur Stromversorgung der Brauereianlage 1 benutzt werden.

Die Solaranlage 25 ist dabei vorteilhafterweise auf dem Dach der Brauereianlage 1 oder an deren Wänden befestigt, da dann keine zusätzliche Fläche für die Solaranlage 25 der Brauereianlage 1 benötigt wird.

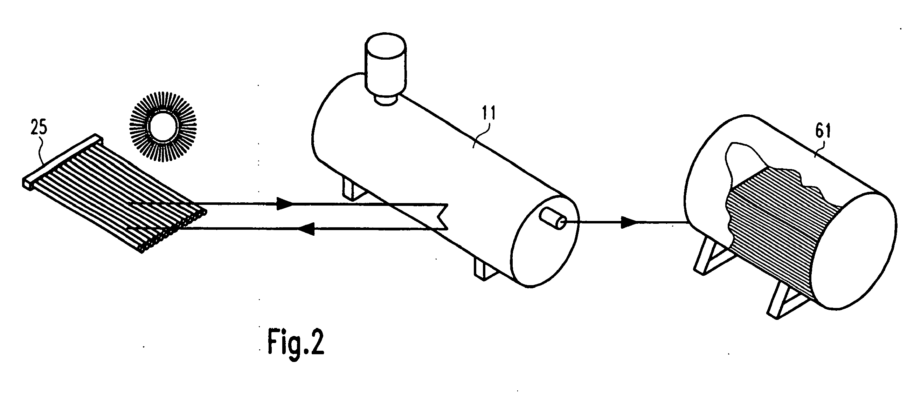

Fig. 2 zeigt eine mögliche Ausführungsform der vorliegenden Erfindung, wobei das von den Sonnenkollektoren 25 erhitzte Fluid, d. h. das Hochdruckheißwasser zunächst in den Wärmespeichertank, d. h. in den Hochdruckheißwassertank 11 geleitet wird, wobei das Wasser in einem Kreislauf zirkuliert, so dass das Hochdruckheißwasser in dem Tank 11 auf einer Temperatur >100°C, beispielsweise 110 bis 120°C, gehalten werden kann. Von dem Hochdruckheißwasserspeicher 11 kann dann das Hochdruckheißwasser zu einem in der Anlage bestehenden Dampfkessel 61 geleitet werden, wonach der Dampf für Wärmeverbraucher, die als Heizmedium Dampf benötigen, wie beispielsweise dem Sudhaus, zugeführt werden kann.

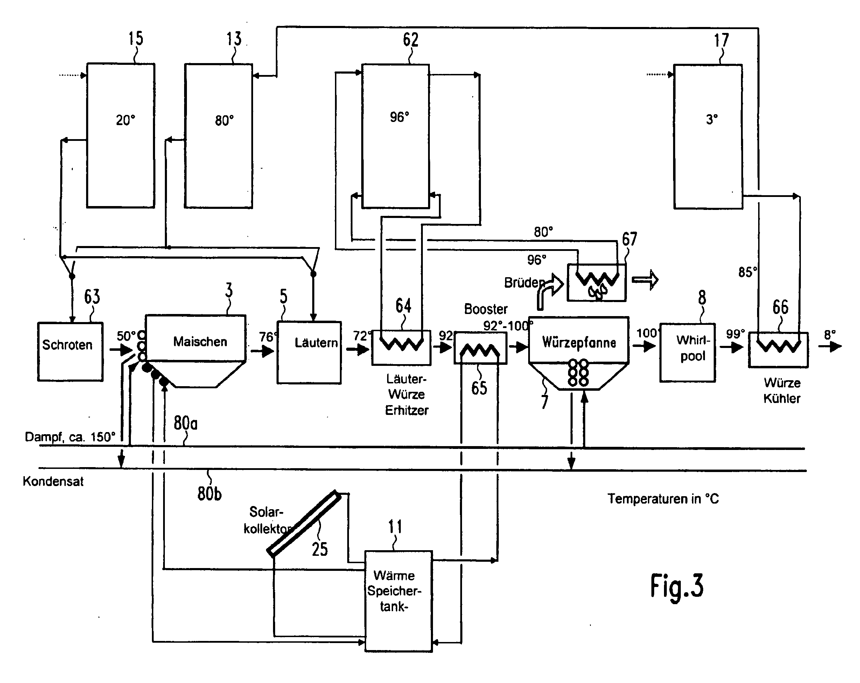

Fig. 3 zeigt ein Konzept, bei dem eine bestehende Brauereianlage eine solarthermisch entkoppelte Wärmeversorgung aufweist. Fig. 3 zeigt wesentliche Einrichtungen für die Bierherstellung, die Wasser unterschiedlichster Temperatur benötigen wie beispielsweise die Schrotmühle 63, die Kaltwasser und Warmwasser aus entsprechenden Kalt- und Warmwasserspeichem benötigt. Weiter sind die wesentlichen Bestandteile des Sudhauses dargestellt mit einem Maischgefäß 3, einem Läuterbottich 5, einem Läuterwürzeerhitzer 64, einem Temperaturbooster 65 einer Würzepfanne 7 sowie einem Whirlpool 8, die hauptsächlich Dampf und/oder Hochdruckheißwasser als Wärmemedium benötigen. Der nach dem Whirlpool angeordnete Würzekühler 66 benötigt als Kälteverbraucher Kühlmedium aus dem Eiswasserspeicher 17. Wie aus der Fig. 3 zu entnehmen ist, weist die entkoppelte Wärmeversorgung Sonnenkollektoren 25 auf, wobei wie zuvor auch schon beschrieben, Hochdruckheißwasser in dem Wärmespeicher 11 gespeichert ist. Hier ist der Wärmespeicher für das von den Sonnenkollektoren 25 erhitzte Hochdruckheißwasser als zusätzlicher Tank zu dem Heißwasserspeicher 62 vorgesehen, der beispielsweise den Läuterwürzeerhitzer 64 mit Wärmeenergie versorgt. Das Hochdruckheißwasser, das in dem Wärmespeicher 11 gespeichert wird, versorgt z. B. den Booster 65 mit Wärmeenergie, der die Würze weiter auf bis zu 100° erwärmt. Mit 67 ist ein Brüdenkondensator dargestellt. Weiter wird über den Wärmespeicher 11 das Maischgefäß 3 mit Wärmeenergie in Form von Dampf und/oder Hochdruckheißwasser versorgt.

Fig. 3 zeigt auch die herkömmliche Dampfleitung 80a sowie die Kondensatleitung 80b, die Wärmeenergie an das Maischgefäß 3 sowie die Würzpfanne 7 leiten. Die Wärmeversorgung durch die Sonnenkollektoren 25 ist wie in Fig. 3 gezeigt von der herkömmlichen Wärmeversorgung durch Dampf und Heißwasser entkoppelt.

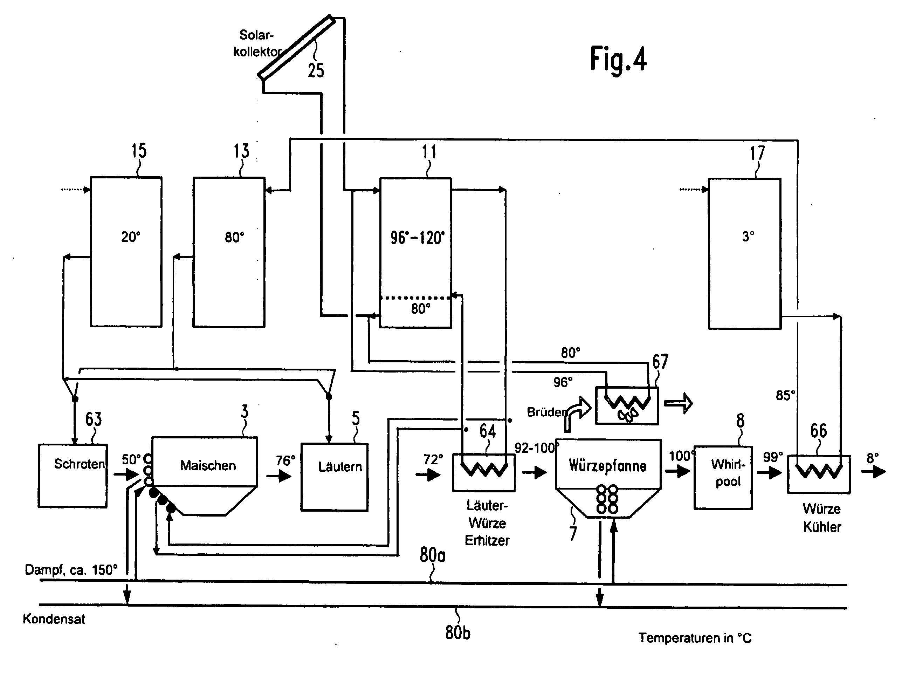

Fig. 4 zeigt hingegen ein Beispiel, bei dem die solarthermische Wärmeversorgung integriert ist. Hier übernimmt der Wärmespeicher 11, beispielsweise ein Schichtenspeicher die Funktion des herkömmlicherweise verwendeten Heißwasserspeichers 62. Das bedeutet, dass hier beispielsweise das Heißwasser, das dem Läuterwürzeerhitzer 64 zugeführt wird, direkt aus dem Wärmespeicher 11, d. h. dem Hochdruckheißwassertank verwendet wird. Das für den Läuterwürzeerhitzer 64 benötigte Hochdruckheißwasser wird dem Hochdruckheißwassertank 11, der ein Schichtenspeicher ist, im oberen Bereich entnommen, dem Läuterwürzeerhitzer 64 zugeführt, und im unteren Bereich des Schichtenspeichers 11 rückgeführt. Für den Brüdenkondensator 67 wird kälteres Wasser aus dem Hochdruckheißwasserspeicher 11 entnommen, erwärmt und im oberen Bereich dem Speicher bzw. Tank 11 rückgeführt. Eine solche Anordnung vereinfacht den Aufbau einer Brauereianlage erheblich, da auf einen Wärmespeichertank verzichtet werden kann.

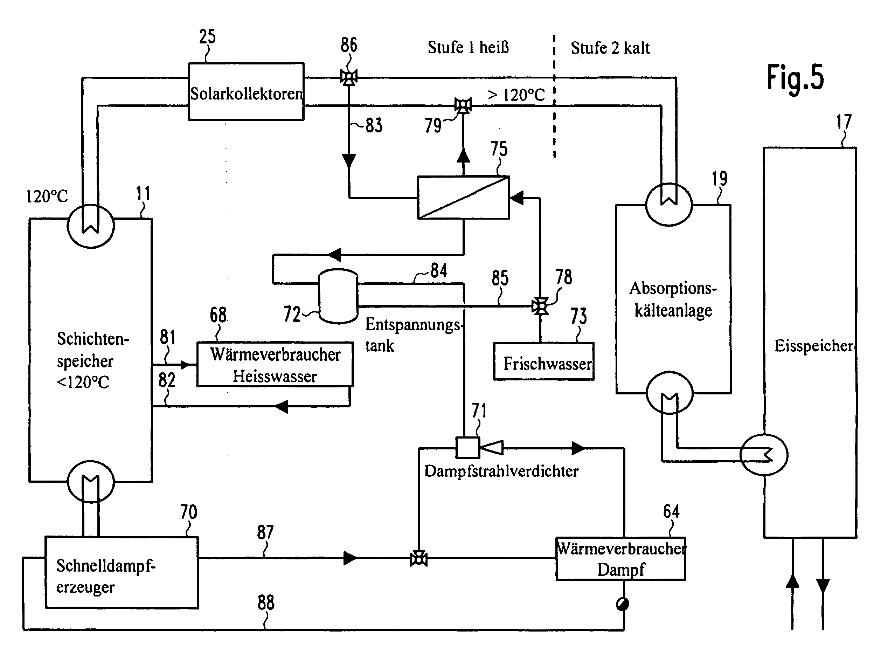

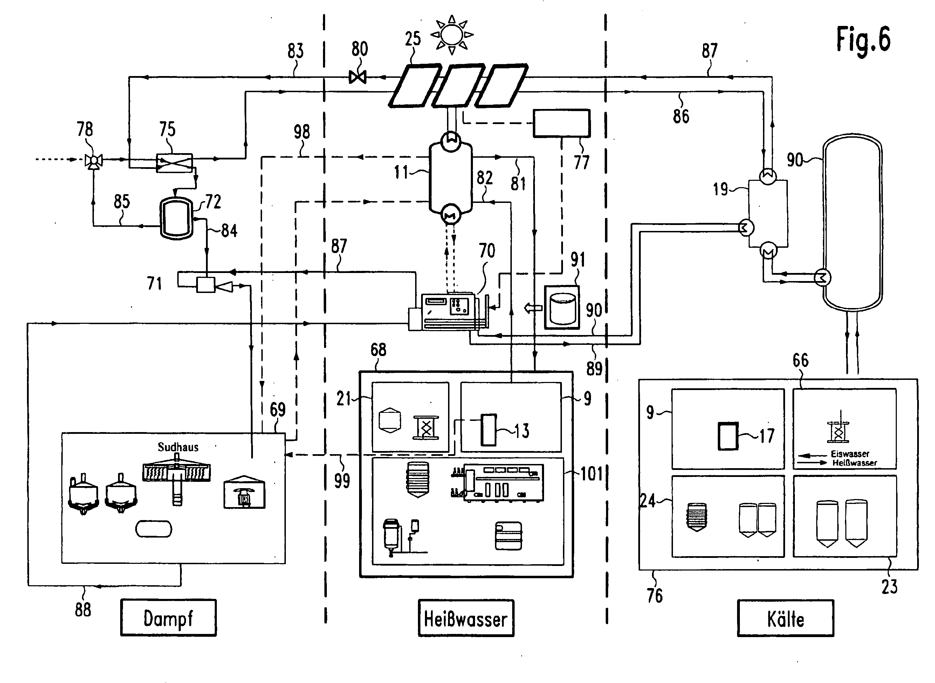

Die Fig. 5 und 6 zeigen ein Gesamtkonzept für eine Brauereianlage mit Wärmeverbrauchern, die Dampf benötigen, 69, sowie Wärmeverbrauchern 68, die Heißwasser benötigen und für Kälteverbraucher 76. Zu den Wärmeverbrauchern, die Dampf benötigen, zählen beispielsweise die einzelnen Bestandteile im Sudhaus, wie Würzepfanne 7 und Maischgefäß 3.

Zu den Wärmeverbrauchern, die als Heizmedium Heißwasser benötigen, zählen neben dem Sudhaus beispielsweise Anlagen 101 zur Flaschenreinigung, Kegreinigung, der Filterkeller, sowie die CIP-Anlage 21 sowie einige Heißwasserverbraucher im Sudhaus wie z. B. Maischgefäß, Läuterwürzeerhitzer etc. Auch im Wasserhaus 9 benötigt der Warmwasserspeicher 13 Heißwasser.

Zu den Kälteverbrauchern, die als Kühlmedium beispielsweise Eiswasser benötigen, zählen beispielsweise der Eiswassertank 17, die Würzekühlung 66, Hefe-, Gär- und Lagerkeller 24 sowie Filter- und Drucktankkeller 23.

Die in den Fig. 5 und 6 gezeigte Brauereianlage weist Sonnenkollektoren 25, insbesondere Vakuumröhrensonnenkollektoren auf, die Hochdruckheißwasser von einer Temperatur von mindestens 120°, insbesondere eine Temperatur von 160 bis 180° erzeugen. Die Sonnenkollektoren 25 produzieren Hochdruckheißwasser sowohl für die Wärmeverbraucher 69, die als Heizmedium Dampf benötigen als auch für die Wärmeverbraucher 68, die Heißwasser benötigen als auch für die Absorptionskälteanlage 19, die Eiswasser für die Kälteverbraucher 76 liefert. Somit werden alle Bereiche durch die Sonnenkollektoren 25 abgedeckt. Zur Heißwasserversorgung sind die Sonnenkollektoren 25 mit einem Hochdruckheißwassertank 11 derart verbunden, dass das Hochdruckheißwasser, das direkt oder indirekt von den Sonnenkollektoren 25 aufgeheizt wurde, zwischen Sonnenkollektoren und Hochdruckheißwassertank zirkuliert. Das Hochdruckheißwasser in dem Hochdruckheißwassertank 11, der hier ein Schichtenspeicher ist, weist eine Temperatur auf, die, wie aus Fig. 5 hervorgeht, von beispielsweise 120° nach unten auf eine Temperatur von <120° abnimmt. Aus dem oberen Bereich des Hochdruckheißwassertanks kann dann über eine Leitung 81 Hochdruckheißwasser an die Wärmeverbraucher 68 geleitet werden, die Heißwasser benötigen. Über die Leitung 82 wird das abgekühlte Heißwasser dem Hochdruckheißwassertank 11 in einen unteren Bereich rückgeführt. Anstelle Dampf als Heizmedium kann auch Hochdruckheißwasser direkt aus dem Hochdruckheißwassertank 11 Verbrauchern im Sudhaus über Leitung 98 im Kreislauf zugeführt werden. Es ist auch möglich Wasser aus dem Warmwassertank 13 über Leitung 99 Verbrauchern im Sudhaus zuzuführen.

Zur Versorgung der Wärmeverbraucher 69, die als Heizmedium Dampf benötigen, wird das Hochdruckheißwasser über eine Leitung 83 einem Wärmetauscher 75 zugeführt, der das Hochdruckwasser dann einem Entspannungstank 72 zuführt. In dem Entspannungstank 72 liegt das von den Sonnenkollektoren erhitzte Wasser sowohl in flüssiger als auch in dampfförmiger Phase vor. Der Dampf wird dem Entspannungstank über die Leitung 84 im oberen Bereich abgezogen und einem Dampfstrahlverdichter 71 zugeführt, wonach er an die Wärmeverbraucher 69 weitergeleitet wird. Kondensat kann z. B. über Leitung 88 zum Schnelldampferzeuger in ein Sammelgefäß geführt werden. Im unteren Bereich des Entspannungstanks 72 zweigt eine Leitung 85 ab, die zu einem Dreiwegeventil 78 führt, wobei über das Dreiwegeventil 78 entweder Frischwasser oder Wasser aus dem Entspannungstank 72 über den Wärmetauscher 75 den Sonnenkollektoren 25 zugeführt werden kann.

Zur Versorgung der Absorptionskälteanlage 19 mit Wärmeenergie wird Hochdruckheißwasser von den Sonnenkollektoren 25 über eine Leitung 86 der Absorptionskälteanlage 19 zugeführt, die in bekannter Weise Wärme in Kälte umwandelt. Auch hier zirkuliert das von den Sonnenkollektoren erhitzte Fluid bzw. Wasser im Kreislauf und kehrt über die Leitung 87 zu den Sonnenkollektoren 25 zurück. Das abgekühlte Wasser wird in einem Kältespeicher, beispielsweise einem Eisscheibenspeicher 90, gespeichert und als Eiswasser dem Eiswassertank 17 und den Kälteverbrauchern 76 zugeleitet.

Die Anlage umfasst weiter eine Einrichtung 77, die erfasst, ob die Leistung der Sonnenkollektoren 25 ausreicht, um das Fluid bzw. das Wasser ausreichend aufzuheizen und den Wärmebedarf der Wärme- bzw. Kälteverbraucher 69, 68, 76, die über die Sonnenkollektoren mit Wärmeenergie versorgt werden, ausreichend zu liefern. Die Einrichtung 77, die in einer Systemsteuerung integriert sein kann, kann dazu beispielsweise die Temperatur in dem Hochdruckheißwasserspeicher 11 mit einer bestimmten Solltemperatur vergleichen, wobei dann, wenn die Temperatur in dem Hochdruckheißwasserspeicher 11 unter einer bestimmten Grenztemperatur liegt, ein Signal an die Schnelldampferzeugereinrichtung 70 geleitet wird, die dann zugeschaltet wird. Es ist jedoch möglich, alternativ oder zusätzlich die Leistung der Sonneneinstrahlung auf die Sonnenkollektoren 25 zu messen, oder die Temperatur des direkt oder indirekt aufgeheizten Fluids zu messen und, wie zuvor erläutert, mit einer entsprechenden Solltemperatur zu vergleichen. Somit können Schwankungen in der Sonneneinstrahlung kompensiert werden, wodurch eine gleichbleibende und konstante Versorgung der einzelnen Wärmeverbraucher mit Wärmeenergie ermöglicht wird. Wenn also die Einrichtung 77 detektiert, dass ein zusätzlicher Wärmeenergiebedarf vorliegt, so wird über die Schnelldampferzeugereinrichtung Dampf erzeugt, der beispielsweise in den unteren Bereich des Hochdruckheißwasserspeichers eingeführt wird und zurückzirkuliert, um die Temperatur in dem Hochdruckheißwassertank 11 in ausreichendem Maße solange zu erhöhen, bis die Temperatur in dem Hochdruckheißwasserspeicher 11 wieder in einem bestimmten Sollbereich liegt, was durch entsprechende nicht dargestellte Sensoren erfasst wird.

Die Schnelldampferzeugereinrichtung 70 führt bei Bedarf jedoch nicht nur dem Heißwasser zusätzliche Wärmeenergie zu, sondern versorgt auch die Wärmeverbraucher 69, die Dampf als Heizmedium benötigen mit zusätzlicher Wärmeenergie, indem über die Leitung 87 Dampf dem Dampfstrahlverdichter 71 und anschließend dem Wärmeverbraucher 69 zugeführt wird. Abgekühltes Das Kondensat wird über die Leitung 88 in zirkulierender Weise der Schnelldampferzeugereinrichtung 70 rückgeführt. Somit wird bei Bedarf, d. h. bei verminderter Sonneneinstrahlung oder erhöhtem Wärmeverbrauch, die notwendige fehlende Wärmemenge zugeführt.

Auch der Absorptionskälteanlage kann, wie ausschließlich in Fig. 6 dargestellt ist, über die Schnelldampferzeugereinrichtung 70 über die Leitung 89 zusätzliche Wärmeenergie in Form von Dampf zugeführt werden und über die Leitung 90 Kondensat wieder der Schnelldampferzeugereinrichtung 70 rückgeführt werden, so dass ausreichend Wärme in Kälte umgewandelt werden kann.

Die Leistung der Schnelldampferzeugereinrichtung 70 wird in Abhängigkeit der Leistung der Sonnenkollektoren 25 und in Abhängigkeit des Verbrauchs der entsprechenden Wärme- bzw. Kälteverbrauchem 69, 68, 76 geregelt. In Fig. 5 und 6 ist nur eine Schnelldampferzeugereinrichtung 70 dargestellt, die sowohl die Wärmeverbraucher 69, 68 sowie die Kälteverbraucher 76 versorgt. Es ist jedoch auch möglich, dass mehrere entsprechende Schnelldampferzeuger 70, die separat von der Einrichtung 77 angesteuert werden, vorgesehen sind.

Die Schnelldampferzeugereinrichtung gemäß der vorliegenden Erfindung zeichnet sich dadurch aus, dass sie eine schnelle Betriebsbereitschaft mit verkürzter Aufheizzeit aufweist. Dies ist insbesondere wichtig, da der Schnelldampferzeuger hier als Bereitschafts- oder Spitzenlastdampferzeuger eingesetzt wird. Die Arbeitsweise eines Schnelldampferzeuger beruht auf dem Wasserrohrprinzip, wobei zugeführtes Wasser in einem Durchlauf erhitzt und verdampft wird. Durch die Wasserrohrausführung ohne definierten Dampfraum ist der Wasserinhalt relativ gering. Wasser geht schnell in Dampf über. Somit kommt es zu keinen Stillstandsverlusten, wie sie beispielsweise bei Flammrohr-Rauchrohrkesseln auftreten. Der Schnelldampferzeuger kann einen integrierten Brenner aufweisen, der wiederum über alternative Brennstoffe 91 betrieben werden kann. Der Schnelldampferzeuger kann 80 bis 2000 kg Dampf pro Stunde erzeugen.

Die Schnelldampferzeugereinrichtung 70 wird vorteilhafterweise durch Verbrennen regenerativer Energiequellen, wie beispielsweise Rapsöl, Biogas, etc. betrieben. Beispielsweise kann die Schnelldampferzeugereinrichtung auch durch ein Biomasse-Blockheizkraftwerk betrieben werden, um unabhängig von konventionellen Energiequellen zu bleiben.

Dadurch, dass das Fluid bzw. Wasser auf hohe Temperaturen von über 120°C erhitzt wird, was insbesondere vorteilhafterweise mit Vakuumröhren-Sonnenkollektoren 25 realisiert werden kann, ist es möglich, gleichzeitig unterschiedliche Wärmeverbraucher 69, 68, 76, 19 mit entsprechender Wärmeenergie zu versorgen und auch Leistungsschwankungen über eine Schnelldampferzeugereinrichtung Rechnung zu tragen.

Die vorherigen Ausführungsformen wurden in Zusammenhang mit Wasser als Fluid beschrieben, sind jedoch nicht auf Wasser beschränkt.

## Patentansprüche

1. Brauereianlage mit wenigstens einem Maischgefäß (3), einem Läuterbottich (5), einer Würzpfanne (7) und einem Wasserhaus (9), wobei mit Sonnenkollektoren (25) zumindest ein Teil des Wärmeenergiebedarfs der Brauerei gedeckt wird, indem die Sonnenkollektoren direkt oder indirekt ein Fluid auf eine Temperatur von mindestens 120°C, insbesondere auf eine Temperatur von 160°C bis 180°C, aufheizen, **dadurch gekennzeichnet, dass** die in den Sonnenkollektoren (25) erzeugte Wärmeenergie in einem Hochdrucktank zwischenspeicherbar ist und über eine Steuereinheit (27) gesteuert den Wärmeenergieverbrauchern, insbesondere dem Maischgefäß (3), dem Läuterbottich (5), der Würzepfanne (7), dem Wasserhaus (9), einer CIP-Anlage (21) und/oder einem Flaschenkeller (23), insbesondere für die Flaschenreinigung, zugeführt wird, wobei der Hochdrucktank ein Schichtenspeicher ist.

2. Brauereianlage nach Anspruch 1, **dadurch gekennzeichnet, dass** zur Kälteversorgung eine sorptive Kälteanlage (19) vorgesehen ist, deren Wärmeenergiebedarf zumindest teilweise über die von den Sonnenkollektoren (25) erzeugte Wärmeenergie gedeckt ist.

3. Brauereianlage nach einem der Ansprüche 1 bis 2, **dadurch gekennzeichnet, dass** das Fluid Wasser unter erhöhtem Druck ist.

4. Brauereianlage nach einem der Ansprüche 1 bis 3, **dadurch gekennzeichnet, dass** die Sonnenkollektoren (25) Parabolrinnen-Kollektoren aufweisen.

5. Brauereianlage nach einem der Ansprüche 1 bis 4, **dadurch gekennzeichnet, dass** beim indirekten Aufheizen des Fluids in den Sonnenkollektoren (25) zur Aufnahme der Wärmeenergie ein Thermoöl, eine Salzschmelze oder Dampf dient.

6. Brauverfahren, wobei der Wärmeenergiebedarf zumindest eines Teils der Brauprozessschritte, insbesondere beim Maischen, Läutern und/oder Würze kochen, zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird, **dadurch gekennzeichnet, dass** die in den Sonnenkollektoren (25) erzeugte Wärmeenergie in einem Hochdrucktank zwischengespeichert wird und über eine Steuereinheit (27) gesteuert den Wärmeenergieverbrauchern, insbesondere dem Maischegefäß (3), dem Läuterbottich (5), der Würzepfanne (7), dem Wasserhaus (9), einer CiP-Anlage (21) und/oder einem Flaschenkeller (23), insbesondere für die Flaschenreinigung zugeführt wird, wobei als Hochdrucktank ein Schichtenspeicher verwendet wird.

7. Brauverfahren nach Anspruch 6, **dadurch gekennzeichnet, dass** der Wärmeenergiebedarf beim Flaschenreinigen zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

8. Brauverfahren nach Anspruch 6 oder 7, **dadurch gekennzeichnet, dass** der Wärmeenergiebedarf einer sorptiven Kälteanlage (19) bei der Herstellung von Eiswasser zumindest teilweise mit einem von Sonnenkollektoren (25) auf eine Temperatur von mindestens 120°C, insbesondere auf eine Temperatur in einem Bereich von 160°C bis 180°C, direkt oder indirekt erhitzen Fluids gedeckt wird.

9. Brauereianlage nach mindestens einem der Ansprüche 1 bis 5, **dadurch gekennzeichnet, dass** die Brauereianlage zusätzlich eine bei Bedarf zuschaltbare Schnelldampferzeugereinrichtung (70) aufweist, die dem von den Sonnenkollektoren (25) zu erhitzenden Fluid zusätzlich Wärmenergie zuführt.

10. Brauereianlage nach Anspruch 9, **dadurch gekennzeichnet, dass** die Anlage eine Einrichtung (77) umfasst, die erfasst, ob die Leistung der Sonnenkollektoren (25) ausreicht, um den Energiebedarf von Wärmeverbrauchern zu decken, denen über das Fluid Wärmeenergie zugeführt wird, insbesondere um das Fluid auf eine Temperatur von mindestens 120, insbesondere 160 bis 180° aufzuheizen, und die veranlasst, die Schnelldampferzeugereinrichtung (70) zuzuschalten, wenn die Leistung der Sonnenkollektoren (25) nicht ausreicht.

11. Brauereianlage nach mindestens einem der Ansprüche 9 oder 10, **dadurch gekennzeichnet, dass** die Leistung der Schnelldampferzeugereinrichtung (70) an die Leistung der Sonnenkollektoren (25) anpassbar ist.

12. Brauereianlage nach mindestens Anspruch 9, **dadurch gekennzeichnet, dass** die Schnelldampferzeugereinrichtung (70) Fluid in dem Hochdrucktank (11) aufheizt.

13. Brauereianlage nach mindestens einem der Ansprüche 9 bis 12, **dadurch gekennzeichnet, dass** ein Teil des von den Sonnenkollektoren (25) erwärmten Wassers als Dampf Wärmeverbrauchern (69) zugeführt wird, die als Heizmedium Dampf benötigen,
ein Teil des von den Sonnenkollektoren erwärmten Fluids, das in dem Hochdruckspeichertank (11), gespeichert ist, Wärmeverbrauchern (68) zugeführt wird, die Heißwasser benötigen und
ein Teil des von den Sonnenkollektoren erwärmten Wassers einer Absorptionskälteanlage (19) zugeführt wird, die Kühlmedium an Kälteverbraucher (76) liefert.

14. Brauereianlage nach mindestens einem der Ansprüche 9 bis 13, **dadurch gekennzeichnet, dass** die zugeschaltete Schnelldampferzeugereinrichtung (70) bei Bedarf Dampf für die Wärmeverbraucher (69) erzeugt, die Dampf benötigen.

15. Brauereianlage nach Anspruch 14, **dadurch gekennzeichnet, dass** der Schnelldampferzeugereinrichtung (70) ein Dampfstrahlverdichter (71) nachgeschaltet ist.

16. Brauereianlage nach einem der Ansprüche 13 bis 15, **dadurch gekennzeichnet, dass** die zugeschaltete Schnelldampferzeugereinrichtung (70) bei Bedarf Wärmeenergie an die Absorptionskälteanlage (19) leitet.

17. Brauereianlage nach mindestens einem der Ansprüche 13 bis 16, **dadurch gekennzeichnet, dass** das für die Wärmeverbraucher (69), die als Heizmedium Dampf benötigen, erhitzte Wasser einem Entspannungstank (72) zugeführt wird, von wo die Dampfphase einem Dampfstrahlverdichter (71) zugeführt wird, bevor es dem Wärmeverbraucher (69) zugeleitet wird.

18. Brauereianlage nach mindestens einem der Ansprüche 1 bis 5 oder 9 bis 18, **dadurch gekennzeichnet, dass** die Schnelldampferzeugereinrichtung (70) durch ein Heizkraftwerk über regenerative Energiequellen betreibbar ist.

19. Brauereianlage nach mindestens einem der Ansprüche 1 bis 5 oder 9 bis 18, **dadurch gekennzeichnet, dass** das Wasserhaus (9) einen Warmwasserspeicher (13), einen Kaltwasserspeicher (15), einen Eiswasserspeicher (17) und einen Heißwasserspeicher (62) umfasst, wobei das von den Sonnenkollektoren (25) erhitzte Fluid in einem gesonderten Wärmespeicher, dem Hochdruckspeichertank (11) gespeichert wird.

20. Brauereianlage nach mindestens einem der Ansprüche 9 bis 19, **dadurch gekennzeichnet, dass** die Schnelldampferzeugereinrichtung (70) mehrere Schnelldampferzeuger umfasst.

21. Brauereiverfahren nach mindestens einem der Ansprüche 6 bis 8, **dadurch gekennzeichnet, dass** dem von den Sonnenkollektoren (25) zu erhitzenden Fluid zusätzlich Wärmeenergie durch eine zuschaltbare Schnelldampferzeugereinrichtung (70) bei Bedarf zugeführt wird.

22. Verfahren nach Anspruch 21, **dadurch gekennzeichnet, dass** erfasst wird, ob die Leistung der Sonnenkollektoren (25) ausreicht, den Energiebedarf von Wärmeverbrauchern zu decken, denen über das Fluid Wärmeenergie zugeführt wird, insbesondere um das Fluid auf eine Temperatur von mindestens 120°, insbesondere 160 bis 180° aufzuheizen, wobei die Schnelldampferzeugereinrichtung (70) zugeschaltet wird, wenn die Leistung der Sonnenkollektoren (25) nicht ausreicht.

23. Brauverfahren nach mindestens einem der Ansprüche 21 bis 22, **dadurch gekennzeichnet, dass** ein Teil des von den Sonnenkollektoren (25) erwärmten Fluids als Dampf Wärmeverbrauchern (69) zugeführt wird, die als Heizmedium Dampf benötigen,
ein Teil des von den Sonnenkollektoren erwärmten Fluids, das in dem Hochdrucktank (11), gespeichert ist, Wärmeverbrauchern (68) zugeführt wird, die Heißwasser benötigen und
ein Teil des von den Sonnenkollektoren (25) erwärmten Fluids einer Absorptionskälteanlage (19) zugeführt wird, die Kältemedium an Kälteverbraucher (76) liefert.

24. Brauverfahren nach mindestens Anspruch 23, **dadurch gekennzeichnet, dass** die zugeschaltete Schnelldampferzeugereinrichtung (70) Dampf für die Wärmeverbraucher (69) liefert, die Dampf benötigen.

25. Brauverfahren nach mindestens Anspruch 23, **dadurch gekennzeichnet, dass** die zugeschaltete Schnelldampferzeugereinrichtung (70) Wärmeenergie an die Absorptionskälteanlage (17) leitet.

26. Brauverfahren nach mindestens Anspruch 23, **dadurch gekennzeichnet, dass** die zugeschaltete Schnelldampferzeugereinrichtung (70) Wasser in dem Hochdrucktank (11) erhitzt.

27. Brauereianlage nach einem der Ansprüche 1 bis 5 oder 9 bis 11, **dadurch gekennzeichnet, dass** die Brauereianlage weiter eine Dampferzeugereinrichtung umfasst, die bei Bedarf die zugeführte Wärmemenge für einen Dampfbereich, Heißwasserbereich und Kältebereich erhöhen kann.

## Claims

1. Brewery plant having at least one mash vessel (3), a lauter tun (5), a wort pan (7) and a water housing (9), wherein at least part of the thermal energy requirement of the brewery is met by solar collectors (25) which directly or indirectly heat a fluid up to a temperature of at least 120°C, in particular to a temperature of 160°C to 180°C, **characterized in that** the thermal energy generated in the solar collectors (25) can be buffer stored in a high pressure tank and supplied, controlled by a control unit (27), to the thermal energy consumers, in particular the mash vessel (3), the lauter tun (5), the wort pan (7), the water housing (9), a CIP plant (21) and/or a bottle cellar (23), in particular for cleaning bottles, wherein the high pressure tank is a stratified store.

2. Brewery plant according to Claim 1, **characterized in that** a sorptive refrigeration plant (19) is provided for supplying refrigeration, the thermal energy requirement of which refrigeration plant (19) is at least partly met by the thermal energy generated by the solar collectors (25).

3. Brewery plant according to one of Claims 1 and 2, **characterized in that** the fluid is pressurized water.

4. Brewery plant according to one of Claims 1 to 3, **characterized in that** the solar collectors (25) are parabolic trough collectors.

5. Brewery plant according to one of Claims 1 to 4, **characterized in that** a thermal oil, molten salt or steam is used for absorbing the thermal energy when the fluid is indirectly heated in the solar collectors (25).

6. Brewing method, wherein the thermal energy requirement of at least some of the brewing process steps, in particular during mashing, lautering and/or wort boiling, is at least partly met by a fluid directly or indirectly heated by solar collectors (25) to a temperature of at least 120°C, in particular to a temperature in a range from 160°C to 180°C, **characterized in that** the thermal energy generated in the solar collectors (25) is buffer stored in a high pressure tank and supplied, controlled by a control unit (27), to the thermal energy consumers, in particular the mash vessel (3), the lauter tun (5), the wort pan (7), the water housing (9), a CIP plant (21) and/or a bottle cellar (23), in particular for cleaning bottles, wherein a stratified store is used as high pressure tank.

7. Brewing method according to Claim 6, **characterized in that** the thermal energy requirement during bottle cleaning is at least partly met by a fluid directly or indirectly heated by solar collectors (25) to a temperature of at least 120°C, in particular to a temperature in a range from 160°C to 180°C.

8. Brewing method according to Claim 6 or 7, **characterized in that** the thermal energy requirement of a sorptive refrigeration plant (19) during the production of ice water is at least partly met by a fluid directly or indirectly heated by solar collectors (25) to a temperature of at least 120°C, in particular to a temperature in a range from 160°C to 180°C.

9. Brewery plant according to at least one of Claims 1 to 5, **characterized in that** the brewery plant additionally has a quick steam generating device (70) which can be switched on on demand and which supplies additional thermal energy to the fluid to be heated by the solar collectors (25).

10. Brewery plant according to Claim 9, **characterized in that** the plant comprises a device (77) which detects whether the power in the solar collectors (25) is sufficient to meet the energy requirement of thermal consumers which are supplied with thermal energy via the fluid, in particular in order to heat the fluid up to a temperature of at least 120°C, in particular 160°C to 180°C, and which switches on the quick steam generating device (70) when the power in the solar collectors (25) is insufficient.

11. Brewery plant according to at least one of Claims 9 and 10, **characterized in that** the power in the quick steam generating device (70) can be matched to the power in the solar collectors (25).

12. Brewery plant according to at least Claim 9, **characterized in that** the quick steam generating device (70) heats up fluid in the high pressure tank (11).

13. Brewery plant according to at least one of Claims 9 to 12, **characterized in that** some of the water heated by the solar collectors (25) is supplied as steam to thermal consumers (69) which require steam as heating medium,
some of the fluid heated by the solar collectors, which is stored in the high pressure storage tank (11), is supplied to thermal consumers (68) which require hot water, and
some of the water heated by the solar collectors is supplied to an absorption refrigeration plant (19) which feeds cooling medium to refrigeration consumers (76).

14. Brewery plant according to at least one of Claims 9 to 13, **characterized in that** the switched on quick steam generating device (70) generates steam on demand for the thermal consumers (69) which require steam.

15. Brewery plant according to Claim 14, **characterized in that** the quick steam generating device (70) is connected downstream of a steam jet compressor (71).

16. Brewery plant according to one of Claims 13 to 15, **characterized in that** the switched on quick steam generating device (70) passes thermal energy on demand to the absorption refrigeration plant (19).

17. Brewery plant according to at least one of Claims 13 to 16, **characterized in that** the water heated for the thermal consumers (69) which require steam as heating medium is supplied to an expansion tank (72) from where the steam phase is supplied to a steam jet compressor (71) before said water is passed to the thermal consumer (69).

18. Brewery plant according to at least one of Claims 1 to 5 or 9 to 18, **characterized in that** the quick steam generating device (70) can be operated by means of a thermal power plant using renewable energy sources.

19. Brewery plant according to at least one of Claims 1 to 5 or 9 to 18, **characterized in that** the water housing (9) comprises a warm water store (13), a cold water store (15), an ice water store (17) and a hot water store (62), wherein the fluid heated by the solar collectors (25) is stored in a separate thermal store, the high pressure storage tank (11).

20. Brewery plant according to at least one of Claims 9 to 19, **characterized in that** the quick steam generating device (70) comprises a plurality of quick steam generators.

21. Brewing method according to at least one of Claims 6 to 8, **characterized in that** thermal energy is additionally supplied on demand by a switchable quick steam generating device (70) to the fluid to be heated by the solar collectors (25).

22. Method according to Claim 21, **characterized in that** it is detected whether the power in the solar collectors (25) is sufficient to meet the energy requirement of thermal consumers to which thermal energy is supplied via the fluid, in particular in order to heat the fluid up to a temperature of at least 120°C, in particular 160°C to 180°C, wherein the quick steam generating device (70) is switched on when the power in the solar collectors (25) is insufficient.

23. Brewing method according to at least one of Claims 21 and 22, **characterized in that** some of the fluid heated by the solar collectors (25) is supplied as steam to thermal consumers (69) which require steam as heating medium,
some of the fluid heated by the solar collectors, which is stored in the high pressure tank (11), is supplied to thermal consumers (68) which require hot water, and
some of the fluid heated by the solar collectors (25) is supplied to an absorption refrigeration plant (19) which feeds cooling medium to refrigeration consumers (76).

24. Brewing method according to at least Claim 23, **characterized in that** the switched on quick steam generating device (70) feeds steam for the thermal consumers (69) which require steam.

25. Brewing method according to at least Claim 23, **characterized in that** the switched on quick steam generating device (70) passes thermal energy to the absorption refrigeration plant (19).

26. Brewing method according to at least Claim 23, **characterized in that** the switched on quick steam generating device (70) heats water in the high pressure tank (11).

27. Brewery plant according to one of Claims 1 to 5 or 9 to 11, **characterized in that** the brewery plant further comprises a steam generating device, which can increase on demand the amount of heat supplied for a steam region, hot water region and refrigeration region.

## Revendications

1. Complexe de brasserie comprenant au moins une cuve à trempe (3), une cuve filtre (5), une chaudière à moût (7) et une chambre de traitement de l'eau (9), au moins une partie de la demande en énergie thermique de la brasserie étant couverte avec des capteurs solaires (25), les capteurs solaires chauffant directement ou indirectement un fluide à une température d'au moins 120 °C, en particulier à une température de 160 °C à 180 °C, **caractérisé en ce que** l'énergie thermique générée dans les capteurs solaires (25) peut être stockée temporairement dans une cuve de garde haute pression et est acheminée, de manière réglée par une unité de commande (27), aux consommateurs de chaleur, en particulier à la cuve à trempe (3), à la cuve filtre (5), à la chaudière à moût (7), à la chambre de traitement de l'eau (9), à une installation CIP (21) et/ou à une cave de présoutirage (23), en particulier pour le lavage des bouteilles, la cuve de garde haute pression représentant un ballon de stockage à stratification.

2. Complexe de brasserie selon la revendication 1, **caractérisé en ce que,** pour l'alimentation en refroidissement, on prévoit une installation de refroidissement par sorption (19), dont la demande en énergie thermique est couverte au moins en partie via l'énergie thermique générée par les capteurs solaires (25).

3. Complexe de brasserie selon l'une quelconque des revendications 1 à 2, **caractérisé en ce que** le fluide représente de l'eau sous haute pression.

4. Complexe de brasserie selon l'une quelconque des revendications 1 à 3, **caractérisé en ce que** les capteurs solaires (25) présentent des miroirs cylindro-paraboliques.

5. Complexe de brasserie selon l'une quelconque des revendications 1 à 4, **caractérisé en ce que,** en cas de chauffage indirect du fluide dans les capteurs solaires (25), on utilise une huile thermique, un sel fondu ou de la vapeur, pour l'absorption de l'énergie thermique.

6. Procédé de brassage, dans lequel la demande en énergie thermique au moins d'une partie des étapes opératoires de brassage, en particulier lors de la trempe, du filtrage et/ou de la cuisson du moût, est couverte au moins en partie avec un fluide chauffé de manière directe ou indirecte par des capteurs solaires (25) à une température d'au moins 120 °C, en particulier à une température dans la plage de 160 °C à 180 °C, **caractérisé en ce que** l'énergie thermique générée dans les capteurs solaires (25) est stockée temporairement dans une cuve de garde haute pression et est acheminée, de manière réglée par une unité de commande (27), aux consommateurs de chaleur, en particulier à la cuve à trempe (3), à la cuve filtre (5), à la chaudière à moût (7), à la chambre de traitement de l'eau (9), à une installation CIP (21) et/ou à une cave de présoutirage (23), en particulier pour le lavage des bouteilles, dans lequel on utilise un ballon de stockage à stratification pour faire office de cuve de garde haute pression.

7. Procédé de brassage selon la revendication 6, **caractérisé en ce que** la demande en énergie thermique lors du nettoyage des bouteilles est couverte au moins en partie avec un fluide chauffé de manière directe ou indirecte par des capteurs solaires (25) à une température d'au moins 120 °C, en particulier à une température dans la plage de 160 °C à 180 °C.

8. Procédé de brassage selon la revendication 6 ou 7, **caractérisé en ce que** la demande en énergie thermique d'une installation de refroidissement par sorption (19), lors de la préparation d'eau glacée, est couverte au moins en partie avec un fluide chauffé de manière directe ou indirecte par des capteurs solaires (25) à une température d'au moins 120 °C, en particulier à une température dans la plage de 160 °C à 180 °C.

9. Complexe de brasserie selon au moins une des revendications 1 à 5, **caractérisé en ce que** le complexe de brasserie présente en outre un générateur de vapeur instantanée (70) apte à être connecté en cas de besoin, qui achemine de l'énergie thermique supplémentaire au fluide qui doit être chauffé par les capteurs solaires (25).

10. Complexe de brasserie selon la revendication 9, **caractérisé en ce que** le complexe comprend un dispositif (77) qui détermine le fait de savoir si la puissance des capteurs solaires (25) suffit pour couvrir la demande en énergie des consommateurs de chaleur, auxquels de l'énergie thermique est acheminée via le fluide, en particulier pour chauffer le fluide à une température d'au moins 120 °C, en particulier de 160 °C à 180 °C, et qui permet de connecter le générateur de vapeur instantanée (70) lorsque la puissance des capteurs solaires (25) ne suffit pas.

11. Complexe de brasserie selon au moins une des revendications 9 ou 10, **caractérisé en ce que** la puissance du générateur de vapeur instantanée (70) peut être adaptée à la puissance des capteurs solaires (25).

12. Complexe de brasserie selon la revendication 9, **caractérisé en ce que** le générateur de vapeur instantanée (70) chauffe un fluide dans la cuve de garde haute pression (11).

13. Complexe de brasserie selon au moins une des revendications 9 à 12, **caractérisé en ce qu'**une partie de l'eau chauffée par les capteurs solaires (25) est acheminée sous la forme de vapeur aux consommateurs de chaleur (69) qui ont besoin de vapeur comme moyen de chauffage ; une partie du fluide chauffé par les capteurs solaires, qui a été stocké dans la cuve de garde haute pression (11), est acheminée aux consommateurs de chaleur (68) qui ont besoin d'eau chaude ; et une partie de l'eau chauffée par les capteurs solaires est acheminée à une installation de refroidissement par absorption (19) qui fournit un moyen de refroidissement aux consommateurs de froid (76).

14. Complexe de brasserie selon au moins une des revendications 9 à 13, **caractérisé en ce que** le générateur de vapeur instantanée connecté (70) génère, en cas de besoin, de la vapeur pour les consommateurs de chaleur (69) qui ont besoin de vapeur.

15. Complexe de brasserie selon la revendication 14, **caractérisé en ce que** le générateur de vapeur instantanée (70) est un compresseur à jet de vapeur (71).

16. Complexe de brasserie selon au moins une des revendications 13 à 15, **caractérisé en ce que** le générateur de vapeur instantanée connecté (70) dirige, en cas de besoin, de l'énergie thermique vers l'installation de refroidissement par absorption (19).

17. Complexe de brasserie selon au moins une des revendications 13 à 16, **caractérisé en ce que** l'eau chauffée pour les consommateurs de chaleur (60) qui ont besoin de vapeur comme moyen de chauffage, est acheminée à une cuve de détente (72) à partir de laquelle la phase vapeur est acheminée à un compresseur à jet de vapeur (71), avant d'être conduite aux consommateurs de chaleur (69).

18. Complexe de brasserie selon au moins une des revendications 1 à 5, ou 9 à 17, **caractérisé en ce que** le générateur de vapeur instantanée (70) peut être exploité par une centrale thermique via des sources d'énergie renouvelable.

19. Complexe de brasserie selon au moins une des revendications 1 à 5, ou 9 à 18, **caractérisé en ce que** la chambre de traitement de l'eau (9) comprend un réservoir pour l'eau chaude (13), un réservoir pour l'eau froide (15), un réservoir pour l'eau glacée (17) et un réservoir pour l'eau très chaude (62), le fluide chauffé par les capteurs solaires (25) étant stocké dans un récupérateur de chaleur séparé, à savoir la cuve de garde haute pression (11).

20. Complexe de brasserie selon au moins une des revendications 9 à 19, **caractérisé en ce que** le générateur de vapeur instantanée (70) comprend plusieurs générateurs de vapeur instantanée.

21. Procédé de brassage selon au moins une des revendications 6 à 8, **caractérisé en ce que** de l'énergie thermique supplémentaire est acheminée en cas de besoin au fluide qui doit être chauffé par les capteurs solaires (25), via un générateur de vapeur instantanée (70) qui peut être connecté.

22. Procédé selon la revendication 21, **caractérisé en ce qu'**on détermine le fait de savoir si la puissance des capteurs solaires (25) suffit pour couvrir la demande en énergie des consommateurs de chaleur, auxquels de l'énergie thermique est acheminée via le fluide, en particulier pour chauffer le fluide à une température d'au moins 120 °C, en particulier de 160 °C à 180 °C, le générateur de vapeur instantanée (70) étant connecté lorsque la puissance des capteurs solaires (25) ne suffit pas.

23. Procédé de brassage selon au moins une des revendications 21 à 22, **caractérisé en ce qu'**une partie du fluide chauffé par les capteurs solaires (25) est acheminée sous forme de vapeur aux consommateurs de chaleur (69) qui ont besoin de vapeur comme moyen de chauffage ; une partie du fluide chauffé par les capteurs solaires, qui a été stocké dans la cuve de garde haute pression (11), est acheminée aux consommateurs de chaleur (68) qui ont besoin d'eau chaude ; et une partie du fluide chauffé par les capteurs solaires est acheminée à une installation de refroidissement par absorption (19) qui fournit un moyen de refroidissement aux consommateurs de froid (76).

24. Procédé de brassage selon au moins la revendication 23, **caractérisé en ce que** le générateur de vapeur instantanée connecté (70) fournit de la vapeur pour les consommateurs de chaleur (69) qui ont besoin de vapeur.

25. Procédé de brassage selon au moins la revendication 23, **caractérisé en ce que** le générateur de vapeur instantanée connecté (70) conduit de l'énergie thermique à l'installation de refroidissement par absorption (19).

26. Procédé de brassage selon au moins la revendication 23, **caractérisé en ce que** le générateur de vapeur instantanée connecté (70) chauffe de l'eau dans la cuve de garde haute pression (11).

27. Complexe de brasserie selon l'une quelconque des revendications 1 à 5 ou 9 à 11, **caractérisé en ce que** le complexe de brasserie comprend en outre un générateur de vapeur qui, en cas de besoin, peut augmenter la quantité d'énergie acheminée, pour une plage de vapeur, une plage d'eau chaude et une plage de froid.
